Europäisches Patentamt

European Patent Office

Office européen des brevets

(19)

(11) Veröffentlichungsnummer: **0 179 308**
**A2**

# (12) EUROPÄISCHE PATENTANMELDUNG

(21) Anmeldenummer: **85112336.4**

(22) Anmeldetag: **28.09.85**

(51) Int. Cl.⁴: **G 06 F 15/21**
**B 65 G 1/137**

(30) Priorität: **20.10.84 DE 3438554**

(43) Veröffentlichungstag der Anmeldung:
**30.04.86 Patentblatt 86/18**

(84) Benannte Vertragsstaaten:
**AT CH DE FR GB IT LI NL SE**

(71) Anmelder: **PRIVATES INSTITUT FÜR PHYSIKALISCH
TECHNISCHE AUFTRAGSFORSCHUNG GMBH
Hindenburgstrasse 36
D-6100 Darmstadt(DE)**

(72) Erfinder: **Keil, Karlheinz
Wittmannstrasse 38
D-6100 Darmstadt(DE)**

(72) Erfinder: **Kühles, Werner
Waldstrasse 129
D-6102 Pfungstadt(DE)**

(74) Vertreter: **Pöhner, Wilfried Anton, Dr.
Haugerpfarrstrasse 9 Postfach 65 68
D-8700 Würzburg 1(DE)**

(54) Vorrichtung zur Lagerverwaltung und -steuerung und insbesondere Warenkommissionierung.

(57) Die Erfindung schlägt eine Vorrichtung zur Lagerverwaltung und -steuerung und insbesondere Warenkommissionierung vor, die aus einem oder mehreren als Sende- und Empfangseinheit ausgebildete Terminals 7 besteht, die mit einem Anzeigefeld und Eingabetasten ausgestattet sind und mit einem Rechner 1 in Verbindung stehen, welcher die eingehenden Signale verarbeitet und dementsprechende Steuerbefehle ausgibt. Erfindungswesentlich ist, daß eines oder mehrere der Terminals 7 mobil sind und mit wenigstens einem fest installierten und ebenfalls als Sende- und Empfangseinheit ausgebildeten Relais 4 über eine Infrarot-Übertragungsstrecke 8 in Verbindung stehen und das Relais 4 seinerseits über eine elektrische Leitung 2, 5 mit dem Rechner 1 verknüpft ist.

EP 0 179 308 A2

- * -
/
1

### Vorrichtung zur Lagerverwaltung und -steuerung und insbesondere Warenkommissionierung

Die Erfindung betrifft eine Vorrichtung zur Lagerverwaltung und -steuerung und insbesondere Warenkommissionierung, mit einem oder mehreren, als Sende- und Empfangseinheit ausgebildete Terminals, die mit Anzeigefeld und Eingabetasten ausgestattet sind und mit einem Rechner in Verbindung stehen, welcher die eingehenden Signale verarbeitet und dementsprechende Steuerbefehle ausgibt.

Bei den im Stande der Technik bekannten Systemen der Lagerhaltung werden die einzelnen Warensendungen entsprechend der Bestellung durch eine Person, den Kommissionierer, zusammengestellt. Dieser erhält seine Anweisungen entweder in Form einer ausgedruckten Liste oder durch innerhalb des Lagerbereichs fest installierte Terminals. Als nachteilig bei fest installierten Systemen hat sich die geringe Flexibilität bei Veränderungen des Regelaufbaus gezeigt. Darüber hinaus treten Mißverständnisse und Informationsverfälschungen, wie z. B. Zahlendreher, häufig auf, wenn ein ständiger On-Line-Dialog mit dem Rechner nicht möglich ist. Hieraus resultiert eine hohe Fehlerhäufigkeit. Zusätzliche Probleme ergeben sich auch dann, wenn die bestellte Menge im Augenblick nicht verfügbar ist, so daß die kommissionierte Menge von der bestellten abweicht. Dies wird zunächst auf einer Liste handschriftlich eingetragen und später über ein Terminal an den Rechner weitergegeben. Diese nachträgliche Erfassung der korrigierten Warenmenge erlaubt in nachteiliger Weise auch nur eine nachträgliche Korrektur der Rechnung und des Warenbestandes. Beide Vorgänge sind mit großem Aufwand verbunden und erlauben es nicht, den tatsächlichen, momentane Lagerbestand (Ist-Situation) zu erfassen. Darüber hinaus kann erst ab Mitteilung an den Rechner ein Fehlbestand erfaßt und an den Umlagerer, z. B. einem Stapelfahrer, weitergegeben werden, dessen Aufgabe das Auffüllen der Warenregale ist.

Hiervon ausgehend hat sich die Erfindung die Schaffung einer insbesondere zur Warenkommissionierung geeigneten Lagerverwaltungs- und -steuerungsvorrichtung zur Aufgabe gemacht, bei der die Kommissionierer in ständigem Dialog mit dem Rechner stehen, die individuell zurückzulegenden Wege auf ein Minimum reduziert sind und die Arbeitseffektivität wesentlich gesteigert werden kann.

Gelöst wird diese Aufgabe dadurch, daß ein oder mehrere der Terminals mobil sind und mit wenigstens einem fest installierten, ebenfalls als Sende- und Empfangseinheit ausgebildeten Relais über eine Infrarot-Übertragungsstrecke in Verbindung stehen und das Relais seinerseits über eine elektrische Leitung mit dem Rechner verknüpft ist. Auf diese Weise ist dem Kommissionierer, unabhängig von seinem augenblicklichen Standort innerhalb des Lagerbereiches, ein direkter Dialog mit dem Rechner möglich. Die völlige Bewegungsfreiheit innerhalb des Lagerbereiches wird dadurch erreicht, daß stirnseitig jedem Gang zwischen zwei Regalen ein Relais zugeordnet ist, welches mit dem Rechner in Verbindung steht. Durch die erfindungsgemäße Vorrichtung ist es dem Kommissionierer möglich, Informationen unmittelbar über die Infrarot-Übertragungsstrecke an das Relais und von dort über die elektrische Leitung an den Rechner weiterzugeben. Diese Nachrichtenübermittlungsstrecke kann ebenfalls im entgegengesetzen Sinne durchlaufen werden, d. h. der Rechner kann über die elektrische Leitung eine Information an das Relais weitergeben, von wo es mit Hilfe einer Infrarot-Übertragungsstrecke zum Terminal und dort zur Anzeige gelangt. Dabei ist es auch möglich, daß mehrere Terminals durch ein und dasselbe Relais angesprochen werden, in dem jeder Nachricht eine Terminaladresse vorangestellt wird, die der Identifizierung dient.

Die Handhabung geschieht wie folgt: Als erstes werden die Bestellungen in den Rechner eingegeben und von diesem aufgearbeitet. Dann werden Steuerbefehle an das Terminal übermittelt, die dem Kommissionierer angeben, welche Ware, in welchen Mengen und an welchem Standort herausgenommen und der jeweiligen Sendung beigegeben werden sollen. Der Kommissionierer begibtsich dann an die entsprechende Stelle des Lagers, führt die Arbeiten aus und bestätigt deren Durchführung oder aber er gibt, sofern die benötigte Menge nicht vorliegt oder nur in Verpackungseinheiten abweichender Größe, an den Rechner die Information weiter, welche Menge er tatsächlich der jeweiligen Sendung beigegeben hat. Dem Rechner ist demnach sofort die Erstellung einer endgültigen Rechnung gemäß dem Lieferstand möglich, so daß sich nachträgliche Korrekturen erübrigen. Ein weiterer Vorteil ist darin zu sehen, daß der Rechner sofort und exakt über die Änderungen des Warenbestandes des Lagers informiert wird, also jederzeit den "Ist-Stand" angeben kann. Hierin ist ein wesentlicher Vorteil zu sehen, denn er ermöglicht, daß der Rechner vor Ausgabe der Befehl an das Terminal bzw den Kommissionierer überprüft, ob die jeweilige Ware in ausreichender Menge vorliegt Ist dies nicht der Fall, wird die Übermittlung dieses Befehles zurückgestellt und ein Nachschubstapler beauftragt, das entsprechende Warenregal aufzufüllen. Für den Fall, daß auch der Staplerfahrer mit einem Terminal ausgerüstet ist, kann dieser die Durchführung des Befehles bestätigen und den Rechner über den Ist-Warenbestand informieren. Erst dann geht der Befehl an den Kommissionierer heraus. Bei dieser Vorgehensweise ist es sichergestellt, daß der Kommissionierer bei seiner Arbeit ein stets hinreichend gefülltes Warenregal vorfindet, so daß Verzögerungen, wiederholte Anmarschwege und nachträgliche Umstellungen und Korrekturen nicht mehr vorkommen. Bereits hierdurch läßt sich eine wesentliche Steigerung der Arbeitseffektivität erreichen.

Durch das direkte Ansprechen kann der Kommissionierer auf optimalem, d. h. kürzestem Weg durch das Warenlager geführt und die Waren in der dementsprechenden Reihenfolge auf dem Terminal angezeigt werden. Nach Maßgabe der Bestellung ermittelt der Rechner durch Optimierung den kürzesten Weg durch das Lager und zeigt in dieser Reihenfolge die einzelnen Positionen an, die vom Kommissionierer anzulaufen sind. Wegeoptimierung ist insbesondere dann wichtig, wenn die Standorte für die Kommissionierplätze, von denen ein vorgegebener Artikel zu entnehmen ist, geändert werden. Im Ergebnis erhält man eine weitere erhebliche Erleichterung der Arbeit und eine Erhöhung der Effektivität.

Zur Datenübertragung zwischen den tragbaren Terminals und den Relais wird Infrarot-Licht benutzt. Dies bedeutet nicht nur eine sofortige, drahtlose Komunikation, sondern schließt auch alle Probleme aus, die im Zusammenhang mit der Verwendung von beispielsweise Funkfrequenzen entstehen können. Demgegenüber sind Infrarot-Übertragungsstrecken vollkommen sicher, verursachen keine Störungen und können weder Menschen noch Maschinen beeinträchtigen. Eine Betriebsgenehmi-

- 5 -

gung ist ebenfalls nicht erforderlich. Zur Übertragung von Informationen vom Terminal auf den Rechner wird der von diesem ausgehende Infrarot-Lichtstrahl entsprechend der Eingaben moduliert, abgesendet und durch den Empfangsteil des Relais empfangen und dort in elektrische Signale umgewandelt, die über eine elektrische Leitung zum Rechner gelangen, wo sie verarbeitet werden. Die von diesem ausgehenden Steuersignale elektrischer Art gelangen zum Relais, wo sie in dessen Sendeteil in Infrarot-Signale umgewandelt werden, die von dort zur Empfangseinheit des Terminals gelangen und eine entsprechende Anzeige bewirken. Dieser, in beide Richtungen mögliche Informationsfluß gestattet dem Kommissionierer, mit dem Rechner in einen On-Line-Dialog zu treten.

Die Verwendung der erfindungsgemäßen Vorrichtung ermöglicht gegenüber vorbekannten Systemen eine wesentliche Steigerung der Arbeitseffektivität, damit eine Reduzierung des Personalstandes und demzufolge eine Senkung der Lagerhaltungs- und Verwaltungskosten bei gleichzeitiger Erhöhung des Warenflußes

In Weiterbildung der Erfindung ist vorgesehen, jedem Warenfach eine optische Anzeige zuzuordnen, die über ein Relais und/oder einen Rechner derart gesteuert ist, daß bei aus dem jeweiligen Warenfach zu entnehmender Ware die Anzeige erfolgt. Eine mögliche Form der Realisierung besteht darin, in jedem Warenfach eine Signallampe anzubringen und diese stets aufleuchten zu lassen, wenn demselben Ware zu entnehmen ist. Die Ansteuerung kann entweder direkt durch den Rechner oder über das Relais erfolgen und die Übertragung durch Leitungen unmittelbar zur Anzeige oder aber drahtlos zu einem im Lagerbereich befindlichen Empfangsteil und von dort zu den einzelnen Lampen. Der wesentliche Vorteil der Weiterbildung besteht darin, daß der Kommissionierer durch eine optische Führung bei seinen Arbeiten unterstützt wird.

Zur weiteren Steigerung der Arbeitseffektivität eines Kommissionierers hat die Erfindung als vorteilhaft erkannt, diesem mehrere Kommissionierbehälter, jeweils einen Behälter für eine Bestellung beizugeben und beim Durchgang durch das Warenlager gleichzeitig zu beschikken. Zur optischen Unterscheidung, welchem der Behälter die gerade entnommene Ware zuzuordnen ist, werden die Maßnahmen gemäß Anspruch 3 vorgeschlagen. Auch hier kann die optische Anzeige in Form einer Lampe realisiert werden, deren Steuerung drahtlos oder über eine elektrische Verbindung mit dem Terminal durchführbar ist. Die Zuordnung zu den Kommissionierbehältern erfolgt entweder unmittelbar, d. h. durch Anbringen der optischen Anzeige am Kommissionierbehälter oder aber mittelbar durch optische Anzeigen auf dem Terminal. So ist es denkbar, Lampen unterschiedlicher Farbe am Terminal vorzusehen, deren Farbgebung einem bestimmten Kommissionierbehälter entspricht. Selbstverständlich ist auch denkbar, durch entsprechendes Ansteuern das Display des Terminals zur optischen Anzeige zu verwenden, beispielsweise dadurch, daß jedem Kommissionierbehälter eine bestimmte Nummer zugeteilt und im Bedarfsfalle angezeigt wird.

Eine wesentliche Vereinfachung der Bedienung des mobilen Terminals läßt sich durch Anbringung von Eingabetasten bestimmter Funktion erreichen, derart, daß bei deren Betätigen der nächste zu erledigende Auftrag angezeigt und/oder der angezeigte Auftrag zurückgestellt und/oder ein Überschreiben der angezeigten Daten ermöglicht und/oder die Versorgung des Nachschubes für ein Lagerfach ausgelöst werden kann. Auf diesem Wege wird der Bedienungsperson das Angeben längerer und insbesondere sich ständig wiederholender Befehle grundlegend vereinfacht.

Weitere Einzelheiten, Merkmale und Vorteile der Erfindung lassen sich dem nachfolgenden Beschreibungsteil entnehmen, in dem die Funktion der erfindungsgemäßen Vorrichtung anhand eines Blockschaltbildes prinzipienhaft wiedergegeben ist.

Das gezeigte Ausführungsbeispiel besteht aus einem Rechner 1, der über eine elektrische Leitung 2 mit der Zentrale 3 in Verbindung steht, von der sämtliche Relais 4 angesteuert und mit einer elektrischen Leitung 5 verknüpft sind, die in beiden Richtungen zur Datenübertragung benutzt wird. Der Rechner 1 und die Zentrale 3 können sich in einem anderen Raum als die Relais 4 befinden, wie durch die Wand 6 angedeutet ist. Dabei sind im Lagerraum die Relais 4 so angeordnet, daß zumindest ein Relais 4 von jeder Stelle des Lagers aus über ein Terminal 7 angesprochen werden kann.

Gemäß der Erfindung sind die Terminals 7 tragbar und können bis zu Arbeitsentfernungen zwischen 45 m und 250 m völlig frei und unabhängig von jeglicher Drahtverbindung betrieben werden. Sie sind in aller Regel batteriebetrieben und ermöglichen eine sofortige On-Line-Kommunikation zwischen dem Bediener und dem Rechner, genauso, wie dies von drahtgebundenen Terminals aus geschieht. Der Rechner ist dadurch jederzeit über den Ist-Lagerbestand genau informiert.

Ein weiterer Kern der Erfindung besteht darin, daß zur Realisierung der Übertragungsstrecke 8 ein Infrarotsignal Verwendung findet. Dies bedeutet nicht nur eine sofortige, drahtlose Kommunikation, sondern schließt darüber hinaus auch alle Probleme aus, die beispielsweise im Zusammenhang mit der Verwendung von Funkfrequenzen entstehen können. Infrarot-Signale verursachen
keine Störungen und Beeinträchtigungen von Menschen
und Maschinen.

Um eine Übertragung in beiden Richtungen zu gestatten,
besitzen sowohl die Relais 4 als auch die Terminals 7
jeweils eine Sende- und Empfangseinheit. Deshalb können
vom Rechner 1 an das Teminal 7 Befehle übermittelt und
umgekehrt durch Eingabe von Informationen in das Terminal 7 diese an den Rechner 1 sofort weitergegeben
werden.

Im Ergebnis erhält man eine Vorrichtung, die eine wesentliche Steigerung der Arbeitseffektivität bei der
Lagerverwaltung und insbesondere Warenkommissionierung
zur Folge hat.

**Dr. w. SCHÄFER-von REPEL**
Rechtsanwalt

**Dipl.-Phys. Dr. w. PÖHNER**
Patentanwalt 0179308

Haugerpfarrstr. 9 · D-8700 Würzburg 1 · Postfach 6568 · ☎ (0931) 13131 · Tx 680111

A N S P R Ü C H E

1. Vorrichtung zur Lagerverwaltung und -steuerung und insbesondere Warenkommissionierung, mit einem oder mehreren als Sende- und Empfangseinheit ausgebildete Terminals, die mit Anzeigefeld und Eingabetasten ausgestattet sind und mit einem Rechner 1 in Verbindung stehen, welcher die eingehenden Signale verarbeitet und dementsprechende Steuerbefehle ausgibt, d a - d u r c h   g e k e n n z e i c h n e t, daß eine oder mehrere der Terminals 7 mobil sind und mit wenigstens einem fest installierten, ebenfalls als Sende- und Empfangseinheit ausgebildeten Relais 4 über eine In- frarot-Übertragungsstrecke 8 in Verbindung stehen und das Relais 4 seinerseits über eine elektrische Leitung 2, 5 mit dem Rechner 1 verknüpft ist

2. Vorrichtung nach Anspruch 1, d a d u r c h   g e - k e n n z e i c h n e t, daß eine jedem Warenfach des Lagers zugeordnete optische Anzeige über ein Relais 4 und/oder Rechner 1 derart gesteuert ist, daß bei aus dem jeweiligen Warenfach zu entnehmender Ware eine Anzeige erfolgt.

3. Vorrichtung nach Anspruch 1 oder 2, d a d u r c h   g e k e n n z e i c h n e t, daß eine jedem Kommissio- nierbehälter zugeordnete optische Anzeige drahtlos oder über ein Kabel derart gesteuert wird, daß bei im jeweiligen Kommissionierbehälter abzulegender Ware eine Anzei- ge erfolgt.

0179308

- 2 -

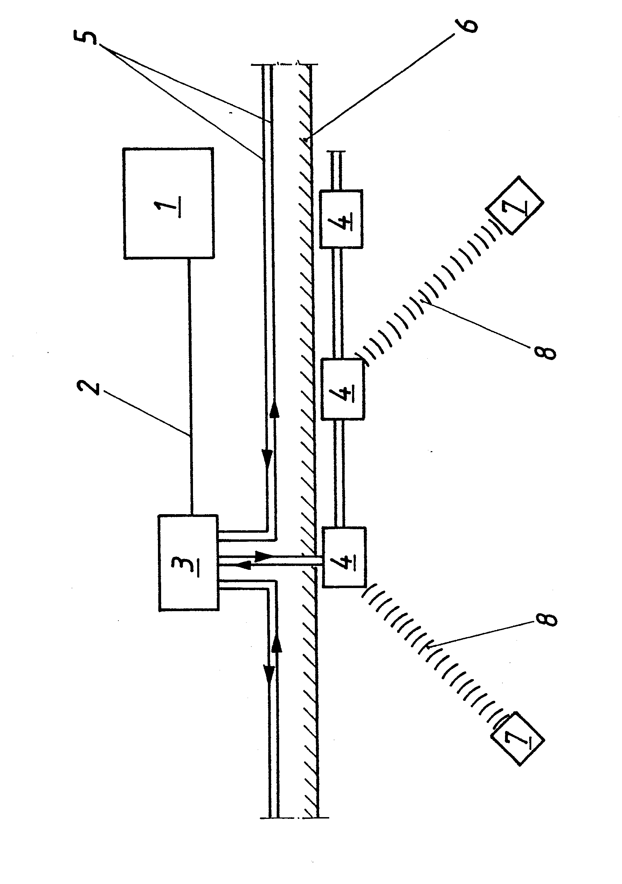

4. Vorrichtung nach einem der Ansprüche 1 - 3, d a - d u r c h g e k e n n z e i c h n e t , daß am mobilen Terminal 7 Eingabetasten angebracht sind, die bei Betätigen den nächsten zu erledigenden Auftrag anzeigen und/oder den im Anzeigefeld stehenden Auftrag zurückstellen und/oder das Überschreiben der angezeigten Daten ermöglichen und/oder die Versorgung mit Nachschub eines Lagerfaches auslösen.